# EUROPEAN PATENT APPLICATION

(11) **EP 3 443 860 A1**
(43) Date of publication of application: **20.02.2019**
(21) Application number: 17877464.2
(22) Date of filing: 06.12.2017
(51) Int. Cl.: A45D 31/00, A45D 29/18, B44C 3/02, A44C 15/00, B32B 7/12, B32B 7/06

(54) **STICKER TRANSFER ASSEMBLY SET AND STICKER TRANSFER METHOD USING SAME**

(30) Priority: 07.12.2016 KR 20160166104
(71) Applicant: JC Korea Corp., Anyang-si, Gyeonggi-do 14086 (KR)
(72) Inventor: KIM, Dong Sung, Yongin-si, Gyeonggi-do 16918 (KR); CHOI, Kyoung Sik, Anyang-si, Gyeonggi-do 13903 (KR)
(74) Representative: V.O.
(86) International application number: PCT/KR2017/014250
(87) International publication number: WO 2018/106023

(57) **Abstract**

Disclosed are a sticker transfer assembly set and a sticker transfer method using the same. The sticker transfer assembly set according to an embodiment of the present disclosure includes a sticker having a decoration peelably adhered to a release sheet, and a transfer body including an adhesion part, wherein the decoration is adhered to the adhesion part when pressing an upper surface of the decoration adhered to the release sheet upon contact, wherein the transfer body peels the decoration off from the release sheet and attaches the decoration to a target by pressing the decoration onto the target upon contact.

## Description

### [Technical Field]

The present disclosure relates to a sticker transfer assembly set and a sticker transfer method using the same, and more particularly, to a sticker transfer assembly set for easily transferring a decoration adhered to a sticker onto a target and a sticker transfer method using the same.

### [Background Art]

A user attaches artificial nails to change the length or shape of her nails. Additionally, the user attaches or adheres 2- or 3-dimensional decorations to the artificial nails to improve the aesthetic appearance of the artificial nails.

Meanwhile, in general, a process of attaching 2- or 3-dimensional decorations to artificial nails includes separating each decoration from a sticker and attaching each separated decoration to each artificial nail by a user's manual operation. In this case, because an amount of operations a user can perform is limited, the operation time required to attach decorations to artificial nails is prolonged and there is a rise in production cost of artificial nails.

Additionally, while the user is manually separating the decoration from the sticker, the decoration may be contaminated with impurities, and as a consequence, the decoration may not be attached to the artificial nail well.

Additionally, the operation time required to attach decorations to artificial nails and the location and the adhesive strength at which decorations are attached to artificial nails change depending on the user's ability to perform an operation, resulting in lower repeated reproducibility. In particular, when attaching 3-dimensional decorations to artificial nails, because the artificial nails have a 3-dimensional curved shape, there is difficulty in attaching 3-dimensional decorations to correct locations depending on the user's ability to perform an operation.

To solve the above-described problem, conventionally, an artificial nail having a groove is insert-molded and a decoration is manually inserted into the groove, but in this case, it takes much time to select a decoration that fits the size of the groove, and to attach decorations of different sizes to artificial nails, it is necessary to replace the artificial nail mold each time, causing an increase of production costs.

Additionally, conventionally, a sticker to which decorations are attached and which is tailored to the shape of artificial nails is attached directly onto the upper surface of an artificial nail, but in this case, because the artificial nail has a 3-dimensional curved shape, a bubble layer is formed between the sticker and the artificial nail, or wrinkles occur in the sticker attached to the artificial nail.

Accordingly, there is a need for an approach to easily attaching decorations to artificial nails to thereby reduce the operation time.

### [Disclosure]

### [Technical Problem]

Therefore, the present disclosure is directed to providing a sticker transfer assembly set for easily attaching a decoration to a target, for example, an artificial nail, to reduce the operation time and a sticker transfer method using the same.

### [Technical Solution]

According to an aspect of the present disclosure, there is provided a sticker transfer assembly set including a sticker having a decoration peelably adhered to a release sheet, and a transfer body including a main body part and an adhesion part provided below the main body part, wherein the decoration is adhered to the adhesion part when pressing an upper surface of the decoration adhered to the release sheet upon contact, wherein the transfer body peels the decoration off from the release sheet and attaches the decoration to a target by pressing the decoration onto the target upon contact.

The tackiness between the decoration and the target may be larger than the tackiness between the decoration and the adhesion part.

The tackiness of the decoration may be 300-25,000 gf/in, and the tackiness of the adhesion part may be 5-15,000 gf/in.

The decoration may have tackiness, and may be formed from a material including one selected from olefin resin, acrylic resin, urethane resin, silicone resin and rubber or mixtures thereof.

The sticker may further include an adhesive layer provided on a lower surface of the decoration and peelably adhered to the release sheet, and the tackiness of the adhesive layer may be 300-25,000 gf/in.

The adhesion part may have tackiness, and may be formed from a material including one selected from olefin resin, acrylic resin, urethane resin, silicone resin and rubber or mixtures thereof.

The adhesion part may be manufactured in a form of a cushioned sheet or foam.

The transfer body may further include a pressing part which extends from the main body part and is bent, the pressing part having a lower surface to which the adhesion part is attached and an upper surface having a flat or curved shape to which pressing is applied, and the main body part may be manufactured from a material which is capable of elastic recovery when pressing the decoration upon contact.

The pressing part may be provided at two ends of the main body part and each differently sized to match a size of the decoration, and when the pressing part has a curved shape, a widthwise direction radius of curvature of the pressing part may be 10-360 mm and a lengthwise direction radius of curvature of the pressing part may be 30-400 mm.

The surface tension of the release sheet may be 36 dyne/cm or less per unit width.

The decoration may include a 3-dimensional decoration and a 2-dimensional decoration.

The decoration may be attached to a 2-dimensional plane or a 3-dimensional curve of the target.

According to another aspect of the present disclosure, a sticker transfer method includes (a) adhering a decoration adhered to a sticker to an adhesion part of a transfer body, and (b) transferring the transfer body having the decoration adhered thereto to a target, and attaching the decoration to the target.

The step (a) may include (a-1) contacting the adhesion part provided on a lower surface of a pressing part provided in the transfer body with the decoration, (a-2) with the adhesion part being in contact with the decoration, pressing an upper surface of the pressing part to adhere the decoration to the adhesion part, and (a-3) lifting up the transfer body to peel the decoration off from a release sheet of the sticker.

The step (b) may include (b-1) transferring the transfer body having the decoration adhered thereto above the target, and contacting the decoration with an upper surface of the target, and (b-2) pressing the upper surface of the pressing part to attach the decoration to the upper surface of the target.

The tackiness between the decoration and the target may be larger than the tackiness between the decoration and the adhesion part.

The tackiness of the decoration may be 300-25,000 gf/in, and the tackiness of the adhesion part may be 5-15,000 gf/in.

The decoration may include a 3-dimensional decoration and a 2-dimensional decoration.

The decoration may be attached to a 2-dimensional plane or a 3-dimensional curve of the target.

### [Advantageous Effects]

The embodiments of the present disclosure press an adhesion part of a transfer body onto an decoration adhered to a release sheet of a sticker upon contact so that the decoration is adhered to the adhesion part, peel the decoration off from the sticker and press the peeled decoration onto a target upon contact, thereby easily attaching the decoration to the target and reducing the operation time.

Additionally, the embodiments of the present disclosure can easily attach a decoration, especially a 3-dimensional decoration, to a target only using a transfer body, thereby improving the operation efficiency.

### [Description of Drawings]

FIG. 1 is a perspective view showing a sticker transfer assembly set according to the present disclosure.
FIG. 2 is a cross-sectional view showing a transfer body according to another embodiment of the present disclosure.
FIG. 3 is a cross-sectional view of a sticker according to the present disclosure.
FIGS. 4A and 4B are side views showing the radius of curvature of a pressing part according to the present disclosure.
FIG. 5 is a flowchart showing a sticker transfer method according to the present disclosure.
FIG. 6 is an operation state diagram showing an operation of peeling a decoration off from a sticker according to the present disclosure.
FIG. 7 is an operation state diagram showing an operation of attaching a decoration to a target according to the present disclosure.

### [Best Mode]

To fully understand the present disclosure, the operational advantages of the present disclosure and the objects achieved by the practice of the present disclosure, a reference should be made to the accompanying drawings illustrating the preferred embodiments of the present disclosure and the content stated in the accompanying drawings.

Hereinafter, the present disclosure is described in detail by describing the preferred embodiment of the present disclosure with reference to the accompanying drawing. Like reference signs presented in each drawing denote like elements.

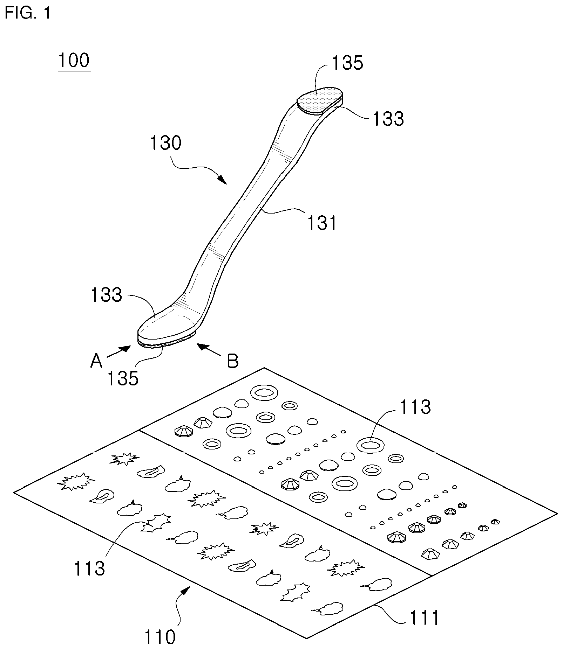

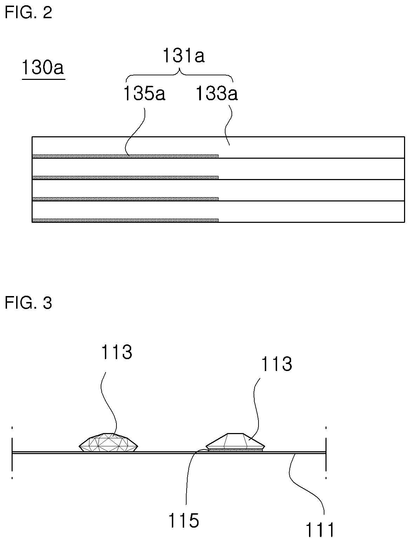

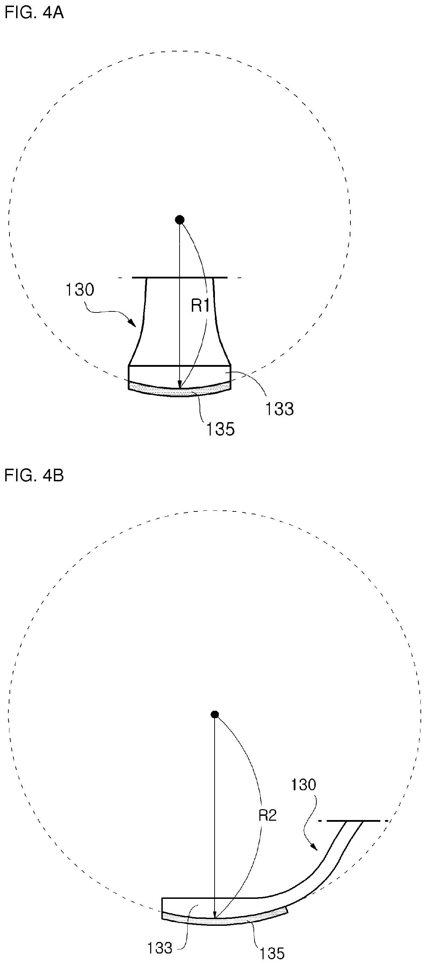

FIG. 1 is a perspective view showing a sticker transfer assembly set according to the present disclosure, FIG. 2 is a cross-sectional view showing a transfer body according to another embodiment of the present disclosure, FIG. 3 is a cross-sectional view of a sticker according to the present disclosure, and FIGS. 4A and 4B are a side view showing the radius of curvature of a pressing part according to the present disclosure.

Referring to FIGS. 1 to 3, the sticker transfer assembly set 100 according to the present disclosure includes a sticker 110 having a decoration 113 peelably adhered to a release sheet 111, and a transfer body 130,130a to peel the decoration 113 adhered to the sticker 110 off and attach the peeled decoration 113 to a target M. In this embodiment, the target M may include postcards, cards, films and sheets having a 2-dimensional (2D) plane, and kid's toys, electronic products, artificial nails, fingernails and toenails having a 3-dimensional (3D) curve.

The sticker transfer assembly set 100 according to the present disclosure adheres the decoration 113 to the transfer body 130,130a, transfers the transfer body 130,130a having the decoration 113 adhered thereto above the target M, and presses the decoration 113 onto the target M upon contact so that the decoration 113 can be easily attached to the target M using the transfer body 130,130a.

The sticker 110 according to this embodiment has the decoration 113 peelably adhered to the upper surface of the release sheet 111.

The release sheet 111 may be manufactured by surface coating with silicone, Teflon and fluorine on a film or a sheet made of one selected from paper, poly vinyl chloride (PVC), polyethylene (PE), polyurethane (PU), polypropylene (PP), polyethylene phthalate (PET), polyolefin elastomer (POE), ethylene-vinyl acetate copolymer (EVA) and acrylic resin or polymers thereof.

The decoration 113 is adhered to the upper surface of the release sheet 111, and the release sheet 111 assists in peeling the decoration 113 off safely and easily to prevent the decoration 113 from being broken or damaged in the process of peeling the decoration 113 off.

In this embodiment, the surface tension of the release sheet 111 is 36 dyne/cm or less per unit width, to easily peel the decoration 113 off from the release sheet 111 and prevent the tearing and pop-up phenomena of the release sheet 111.

Additionally, in this embodiment, the decoration 113 is attached to the upper surface of the release sheet 111, and in this embodiment, the decoration 113 includes 3D decorations 113 such as jewelry and 2D decorations 113 such as a film printed with design. That is, the 3D decorations 113 and/or the 2D decorations 113 may be peelably adhered to the upper surface of the release sheet 111.

The decoration 113 according to this embodiment may be manufactured from a material having tackiness per se. Specifically, the decoration 113 according to this embodiment may be formed from a material including one selected from olefin resin, acrylic resin, urethane resin, silicone resin and rubber or mixtures thereof, so that the decoration 113 has tackiness. Additionally, the decoration may be formed from a material including one selected from olefin resin, acrylic resin, urethane resin, silicone resin and rubber or mixtures thereof with an addition of a tackifier. Here, the type of the tackifier includes coumarone-indene resin, rosin-based resin, terpene-based resin and phenol-based resin.

Additionally, as shown in FIG. 3, the sticker 110 according to this embodiment may further include an adhesive layer 115 provided on the lower surface of the decoration 113 and peelably adhered to the release sheet 111. In this instance, the decoration 113 and the adhesive layer 115 may be integrally formed.

Meanwhile, the tackiness of the decoration 113 per se and the tackiness of the adhesive layer 115 provided on the lower surface of the decoration 113 is preferably 300-25,000 gf/in. The tackiness measurement may be performed in accordance with ASTM D3330 180 degree PEEL TEST.

For example, when attaching the decoration 113 to the artificial nail M, in case that the tackiness of the decoration 113 and the adhesive layer 115 is less than 300 gf/in, the decoration 113 and the adhesive layer 115 are spaced apart from the artificial nail M and they are more likely to be separated from the artificial nail M, and in case that the tackiness of the decoration 113 and the adhesive layer 115 exceeds 25,000 gf/in, the artificial nail M may be damaged when the user separates the decoration 113 and the adhesive layer 115 from the artificial nail M for replacement purposes.

Accordingly, the tackiness of the decoration 113 and the adhesive layer 115 provided on the lower surface of the decoration 113 is preferably 300-25,000 gf/in.

The transfer body 130,130a according to this embodiment plays a role in easily peeling the decoration 113 adhered to the release sheet 111 off from the release sheet 111, and easily attaching the peeled the decoration 113 to the target M.

As shown in FIG. 1, the transfer body 130 according to an embodiment includes a main body part 131, a pressing part 133 that extends from the main body part 131 and is bent, and an adhesion part 135 attached to the lower surface of the pressing part 133.

The main body part 131 may be formed in the shape of a long rod to allow the user to hold, but the scope of protection of the present disclosure is not limited thereto, and any shape the user can hold is available.

Additionally, the pressing part 133 extends from one or two ends of the main body part 131 and is bent, and may be formed in a flat shape that allows the user to press the upper surface with a finger.

Additionally, the pressing part 133 may be formed in a curved shape having a predetermined radius of curvature. When the pressing part is formed in a curved shape, as shown in FIG. 4A, a widthwise direction radius of curvature R1 of the pressing part 133 when viewed from the direction A of FIG. 1 may be 10-360mm, and as shown in FIG. 4B, a lengthwise direction radius of curvature R2 of the pressing part 133 when viewed from the direction B of FIG. 1 may be 30-400 mm.

Additionally, the adhesion part 135 as described below is detachably attached to the lower surface of the pressing part 133.

Additionally, when the pressing part 133 is formed at two ends of the main body part 131, sizes may be different to match the size of the decoration 113.

Additionally, the adhesion part 135 plays a role in adhering the decoration 113 adhered to the sticker 110 and peeling the decoration 113 off from the release sheet 111. Additionally, the decoration 113 adhered to the adhesion part 135 is transferred to the upper surface of the target M.

Specifically, the adhesion part 135 comes into contact with the upper surface of the decoration 113 adhered to the release sheet 111, the pressing part 133 is pressed with a finger to adhere the decoration 113 to the adhesion part 135, the decoration 113 is peeled off from the release sheet 111, the decoration 113 adhered to the adhesion part 135 comes into contact with the upper surface of the target M, and the pressing part 133 is pressed with a finger to attach the decoration 113 adhered to the adhesion part 135 onto the target M.

The adhesion part 135 may be manufactured in the form of a cushioned sheet or foam. This is to maximize the surface area of the decoration 113 adhered to the adhesion part 135 in adhering the decoration 113 to the adhesion part 135 by pressing the adhesion part 135, and to prevent the breakage and damage of the decoration 113 caused by the adhesion part 135 being pressed.

Additionally, the adhesion part 135 may be attached to the entire area or some areas of the lower surface of the pressing part 133.

Additionally, the adhesion part 135 may be formed from a material including one selected from olefin resin, acrylic resin, urethane resin, silicone resin and rubber or mixtures thereof, so that the adhesion part 135 has tackiness.

Additionally, to attach the decoration 113 to the target M, the tackiness between the decoration 113 or the adhesive layer 115 provided on the lower surface of the decoration 113 and the target M needs to be larger than the tackiness between the decoration 113 and the adhesion part 135.

Specifically, the tackiness of the adhesion part 135 is preferably 5-15,000 gf/in.

For example, when attaching the decoration 113 to the artificial nail M, in case that the tackiness of the adhesion part 135 is less than 5 gf/in, it may not be easy to peel the decoration 113 off from the release sheet 111, and in case that the tackiness of the adhesion part 135 exceeds 15,000 gf/in, the percentage of transfer for attaching the decoration 113 to the target M may be reduced. Accordingly, the tackiness of the adhesion part 135 is preferably 5-15,000 gf/in.

Meanwhile, when adhering the decoration 113 to the adhesion part 135 or attaching the decoration 113 adhered to the adhesion part 135 onto the target M, the user holds the main body part 131 and presses the pressing part 133 with a finger to adhere the decoration 113 to the adhesion part 135 or attach the decoration 113 to the target M. In this way, when repeatedly pressing the decoration 113 upon contact, the main body part 131 needs to be resiliently recovered after pressed. To this end, the main body part 131 is manufactured from a material capable of elastic recovery.

For example, the main body part 131 may be formed from a material including one selected from olefin resin, acrylic resin, urethane resin, silicone resin and rubber or mixtures thereof.

Meanwhile, as shown in FIG. 2, the transfer body 130a according to another embodiment includes a plurality of unit transfer bodies 131a stacked in the heightwise direction. That is, a plurality of unit transfer bodies 131a is stacked in the heightwise direction to form a transfer body 130a. Additionally, each unit transfer body 131a includes a main body part 133a and an adhesion part 135a attached to the lower surface of the main body part 133a.

The main body part 133a may be a film or a sheet made of one selected from poly vinyl chloride (PVC), polyethylene (PE), polyurethane (PU), polypropylene (PP), polyethylene phthalate (PET), polyolefin elastomer (POE), ethylene-vinyl acetate copolymer (EVA) and acrylic resin or polymers thereof. Additionally, the adhesion part 135a according to another embodiment is the same as the above-described adhesion part 135 according to an embodiment, and its detailed description is omitted herein.

The process of transferring the decoration 113 using the transfer body 130a according to another embodiment includes contacting the adhesion part 135a with the upper surface of the decoration 113 adhered to the release sheet 111, pressing the main body part 133a disposed on the adhesion part 135a with a finger to adhere the decoration 113 to the adhesion part 135a, and peeling the decoration 113 off from the release sheet 111. Additionally, the decoration 113 adhered to the adhesion part 135a comes into contact with the upper surface of the target M, and the main body part 133a is pressed with a finger to attach the decoration 113 adhered to the adhesion part 135a onto the target M. Meanwhile, the adhesion part 135a that constitutes the transfer body 130a according to another embodiment is the same as the process of transferring the decoration 113 using the transfer body 130 according to an embodiment as described above, and its detailed description is omitted herein.

In this way, when the adhesion part 135a is repeatedly used, the tackiness of the adhesion part 135a reduces, and when the tackiness of the adhesion part 135a reduces, an operation of separating the unit transfer body 131a having the corresponding adhesion part 135a from the transfer body 130a and attaching the design layer 117, etc. to the nail main body M using an the adhesion part 135a provided in a new unit transfer body 131a is performed.

A sticker transfer method using the sticker transfer assembly set 100 according to the present disclosure as configured above is described as below.

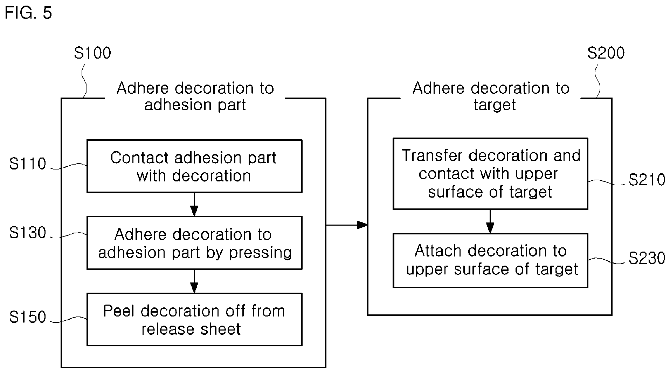

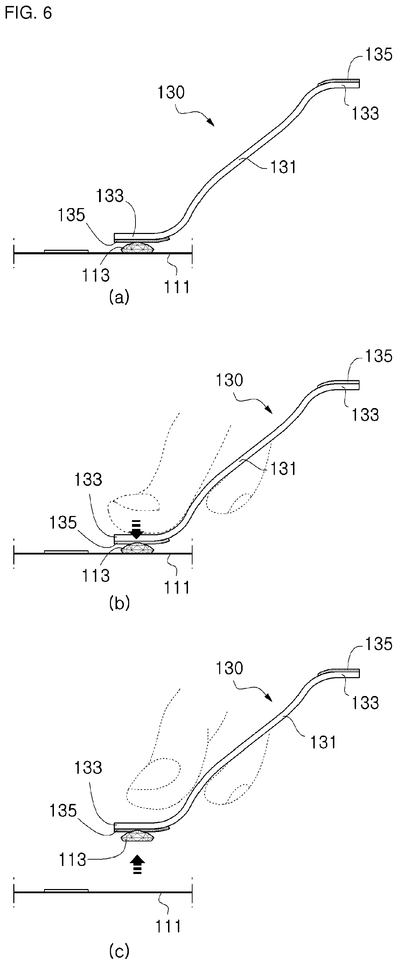

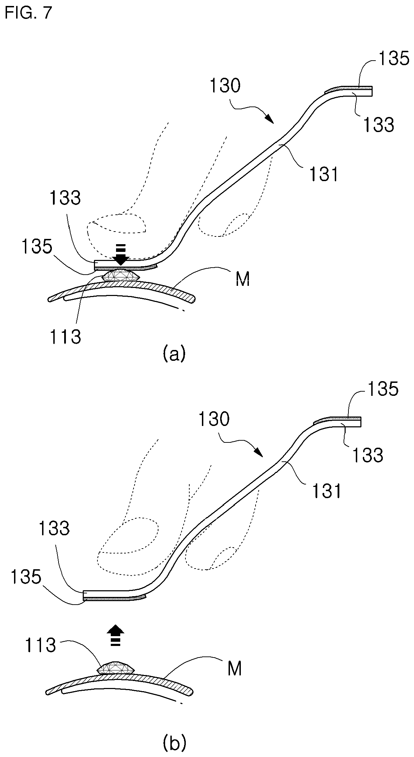

FIG. 5 is a flowchart showing a sticker transfer method according to the present disclosure, FIG. 6 is an operation state diagram showing an operation of peeling a decoration off from a sticker according to the present disclosure, and FIG. 7 is an operation state diagram showing an operation of attaching a decoration to a target according to the present disclosure. Hereinafter, a description is provided taking a case in which the transfer body 130 according to an embodiment is used, and the decoration 113 is stacked on the release sheet 111 as an example.

Referring to FIG. 5, the decoration 113 adhered to the release sheet 111 of the sticker 110 is adhered to the adhesion part 135 of the transfer body 130 (S100).

Specifically, the operation (S100) of adhering the decoration 113 to the adhesion part 135 includes, as shown in FIG. 6(A), first, contacting the adhesion part 135 provided on the lower surface of the pressing part 133 provided in the transfer body 130 with the upper surface of the decoration 113 (S110). Additionally, as shown in FIG. 6(B), with the adhesion part 135 being in contact with the decoration 113, the upper surface of the pressing part 133 is pressed to adhere the decoration 113 to the adhesion part 135 (S130).

Additionally, as shown in FIG. 6(C), with the decoration 113 being adhered to the adhesion part 135, the transfer body 130 is lifted up to peel the decoration 113 off from the release sheet 111 of the sticker 110 (S150).

Subsequently, after the transfer body 130 having the decoration 113 adhered thereto is transferred to the target M, the decoration 113 is attached to the target M (S200).

Specifically, the operation (S200) of attaching the decoration 113 to the target M includes, as shown in FIG. 7(A), first, transferring the transfer body 130 having the decoration 113 adhered thereto above the target M and contacting the decoration 113 with the upper surface of the target M (S210).

Additionally, as shown in FIG. 7(B), after attaching the decoration 113 to the upper surface of the target M by pressing the upper surface of the pressing part 133, the transfer body 130 is lifted up (S230).

The sticker transfer method according to the present disclosure as described above can easily attach the decoration 113 to the target M only by the operation of adhering the decoration 113 to the adhesion part 135 of the transfer body 130, peeling the decoration 113 off from the release sheet 111, transferring the decoration 113 adhered to the adhesion part 135 to the target M, and pressing the decoration 113 onto the upper surface of the target M upon contact, thereby reducing the operation time and improving the operation efficiency.

It is obvious to those having ordinary skill in the art that the present disclosure is not limited to the disclosed embodiments and various modifications and variations may be made thereto without departing from the spirit and scope of the present disclosure. Accordingly, it should be noted that such modifications or variations fall within the scope of the appended claims.

### [Industrial Applicability]

The present disclosure can easily transfer the decoration to the target, thereby improving the operation efficiency and reducing the operation time.

## Claims

1. A sticker transfer assembly set, comprising:
a sticker having a decoration peelably adhered to a release sheet; and
a transfer body including a main body part and an adhesion part provided below the main body part, wherein the decoration is adhered to the adhesion part when pressing an upper surface of the decoration adhered to the release sheet upon contact, wherein the transfer body peels the decoration off from the release sheet and attaches the decoration to a target by pressing the decoration onto the target upon contact.

2. The sticker transfer assembly set according to claim 1, wherein tackiness between the decoration and the target is larger than tackiness between the decoration and the adhesion part.

3. The sticker transfer assembly set according to claim 1, wherein tackiness of the decoration is 300-25,000 gf/in, and tackiness of the adhesion part is 5-15,000 gf/in.

4. The sticker transfer assembly set according to claim 1, wherein the decoration has tackiness, and is formed from a material including one selected from olefin resin, acrylic resin, urethane resin, silicone resin and rubber or mixtures thereof.

5. The sticker transfer assembly set according to claim 1, wherein the sticker further includes an adhesive layer provided on a lower surface of the decoration and peelably adhered to the release sheet, and
tackiness of the adhesive layer is 300-25,000 gf/in.

6. The sticker transfer assembly set according to claim 1, wherein the adhesion part has tackiness, and is formed from a material including one selected from olefin resin, acrylic resin, urethane resin, silicone resin and rubber or mixtures thereof.

7. The sticker transfer assembly set according to claim 6, wherein the adhesion part is manufactured in a form of a cushioned sheet or foam.

8. The sticker transfer assembly set according to claim 1, wherein the transfer body further includes a pressing part which extends from the main body part and is bent, the pressing part having a lower surface to which the adhesion part is attached and an upper surface having a flat or curved shape to which pressing is applied, and
the main body part is manufactured from a material which is capable of elastic recovery when pressing the decoration upon contact.

9. The sticker transfer assembly set according to claim 8, wherein the pressing part is provided at two ends of the main body part and each differently sized to match a size of the decoration, and
when the pressing part has a curved shape, a widthwise direction radius of curvature of the pressing part is 10-360 mm and a lengthwise direction radius of curvature of the pressing part is 30-400 mm.

10. The sticker transfer assembly set according to claim 1, wherein surface tension of the release sheet is 36 dyne/cm or less per unit width.

11. The sticker transfer assembly set according to claim 1, wherein the decoration includes a 3-dimensional decoration and a 2-dimensional decoration.

12. The sticker transfer method according to claim 1, wherein the decoration is attached to a 2-dimensional plane or a 3-dimensional curve of the target.

13. A sticker transfer method, comprising:
(a) adhering a decoration adhered to a sticker to an adhesion part of a transfer body; and
(b) transferring the transfer body having the decoration adhered thereto to a target, and attaching the decoration to the target.

14. The sticker transfer method according to claim 13, wherein the step (a) comprises:
(a-1) contacting the adhesion part of the transfer body with the decoration;
(a-2) with the adhesion part being in contact with the decoration, pressing the transfer body to adhere the decoration to the adhesion part; and
(a-3) lifting up the transfer body to peel the decoration off from a release sheet of the sticker.

15. The sticker transfer method according to claim 14, wherein the step (b) comprises:
(b-1) transferring the transfer body having the decoration adhered thereto above the target, and contacting the decoration with an upper surface of the target; and
(b-2) pressing the transfer body to attach the decoration to the upper surface of the target.

16. The sticker transfer method according to claim 13, wherein tackiness between the decoration and the target is larger than tackiness between the decoration and the adhesion part.

17. The sticker transfer method according to claim 13, wherein tackiness of the decoration is 300-25,000 gf/in, and
tackiness of the adhesion part is 5-15,000 gf/in.

18. The sticker transfer method according to claim 13, wherein the decoration includes a 3-dimensional decoration and a 2-dimensional decoration.

19. The sticker transfer method according to claim 13, wherein the decoration is attached to a 2-dimensional plane or a 3-dimensional curve of the target.
